# EUROPEAN PATENT APPLICATION

(11) **EP 3 211 629 A1**
(43) Date of publication of application: **30.08.2017**
(21) Application number: 16157100.5
(22) Date of filing: 24.02.2016
(51) Int. Cl.: G09G 3/00, G06F 3/147, G09G 5/14, G06F 3/01, H04N 7/18, G06K 9/00, G06T 19/00

(54) **AN APPARATUS AND ASSOCIATED METHODS**

(71) Applicant: Nokia Technologies Oy, 02610 Espoo (FI)
(72) Inventor: Cricri, Francesco, 33200 Tampere (FI); Eronen, Antti Johannes, 33820 Tampere (FI); Lehtiniemi, Arto Juhani, 33880 Lempäälä (FI)
(74) Representative: Potter Clarkson LLP

(57) **Abstract**

An apparatus comprising:
at least one processor; and
at least one memory including computer program code,
the at least one memory and the computer program code configured to, with the at least one processor, cause the apparatus to perform at least the following:
in respect of virtual reality content comprising video imagery configured to provide a virtual reality space for viewing in virtual reality and
based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

## Description

### Technical Field

The present disclosure relates to the field of virtual reality and, in particular, to the generation and/or control of summary content from virtual reality content. Associated methods, computer programs and apparatus is also disclosed. Certain disclosed aspects/examples relate to portable electronic devices.

### Background

Virtual reality may use a headset, such as glasses or goggles, or one or more displays that surround a user to provide the user with an immersive virtual experience. A virtual reality apparatus may present multimedia virtual reality content representative of a virtual reality space to a user to simulate the user being present within the virtual reality space. The virtual reality space may be provided by a panoramic video, such as a video having a wide or 360° field of view (which may include above and/or below a horizontally oriented field of view). The immersive experience provided by virtual reality may be difficult to present when a summary of the virtual reality content that forms the virtual reality space is required.

The listing or discussion of a prior-published document or any background in this specification should not necessarily be taken as an acknowledgement that the document or background is part of the state of the art or is common general knowledge. One or more aspects/examples of the present disclosure may or may not address one or more of the background issues.

### Summary

In a first example aspect there is provided an apparatus comprising:
at least one processor; and
at least one memory including computer program code,
the at least one memory and the computer program code configured to, with the at least one processor, cause the apparatus to perform at least the following:
   in respect of virtual reality content comprising video imagery configured to provide a virtual reality space for viewing in virtual reality and
   based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
   provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

In one or more embodiments, the plurality of indicated highlight portions further define different temporal portions of the video imagery of the virtual reality content.

In one or more embodiments, the highlight portions that are used to form consecutive clips are non-spatially-overlapping.

In one or more embodiments, the virtual reality content is live content and the apparatus is configured to receive the indicated highlight portions during the live content.

In one or more embodiments, the virtual reality content is pre-recorded content.

In one or more embodiments, the modified spatial separation is such that the angular separation between the clip viewing directions is configured to present the at least one clip and the immediately preceding clip substantially adjacent to one another. Thus, edges of the clips may substantially abut one another. Thus, while presented at different times (consecutively) the angular separation may be such that subsequent clip is presented at an adjacent position that is adjacent to the position of the preceding clip.

In one or more embodiments, the indicated highlight portions comprise predetermined crop areas of the video imagery associated with predetermined crop times of the video imagery and the apparatus is configured to provide for extraction of the video imagery and associated viewing direction to form cropped video portions from the virtual reality content for forming the clips based on the predetermined crop areas of the video imagery and the associated predetermined crop times of the video imagery. Thus, the full virtual reality content may be provided and the apparatus (or server or other apparatus in communication with the apparatus) may create (such as in response to a user request to view a virtual reality summary) the virtual reality summary content with reference to predetermined crop areas and crop times, which may be received from the virtual reality content publisher or other source.

In one or more embodiments, the indicated highlight portions are based on user preferences and the apparatus is configured to provide for extraction of the video imagery and associated viewing direction to form the indicated highlight portions from the virtual reality content based on said user preferences. Thus, the apparatus may be configured to receive user preferences or may use machine learning techniques to learn user preferences and provide signalling representative of the user preferences to generate the virtual reality summary content that is thereby customized to the user preferences. Accordingly, if the virtual reality content is a concert or musical performance and the user preferences indicate the user has an interest in guitar based music, then the user preferences may provide for extraction of highlight portions that feature guitar based music. This may be achieved using predetermined tags or metadata present in the virtual reality content that describe the virtual reality content over its running time or by use of audio/visual identification algorithms.

In a second example aspect there is provided an apparatus comprising:
at least one processor; and
at least one memory including computer program code,
the at least one memory and the computer program code configured to, with the at least one processor, cause the apparatus to perform at least the following:
   in respect of virtual reality summary content comprising a plurality of clips, each clip comprising video imagery associated with one of a plurality of highlight portions of virtual reality content, the virtual reality content comprising video imagery configured to provide a virtual reality space for viewing in virtual reality and each highlight portion comprising a spatial portion of the virtual reality content, each highlight portion associated with a viewing direction in said virtual reality space, and each clip provided for display with a clip viewing direction comprising a direction in which a user is required to point their viewing device to view the clip,
   based on the viewing directions and clip viewing directions, provide for display of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

In one or more embodiments, the apparatus is configured to, based on user input, provide for control of the modified spatial separation at least between an angular separation such that the clips are presented substantially adjacent one another and an angular separation corresponding to the viewing directions of the highlight portions associated with said clips in the virtual reality content.

In one or more embodiments, the user input comprises a translation motion, user actuation of a graphical user interface element, or a voice or sight command.

In one or more embodiments, the apparatus is configured to, based on the user input, provide for a progressive change in the angular separation between the clip viewing direction of the at least one clip and the clip viewing direction of the temporally adjacent clip.

In one or more embodiments, the apparatus is configured to provide a next-clip-direction indicator for presentation to a user during display of at least one of the clips, the indicator based on the viewing direction and/or clip viewing direction of a subsequent clip of the virtual reality summary content, the next-clip indicator thereby indicating to a user at least the direction in which to move their viewing device to view the next clip.

In one or more embodiments, the next-clip-direction indicator comprises a graphic provided for display with the clip, an audio indicator or a haptic indicator.

In one or more embodiments, the apparatus is configured to, based on a detected posture of a user, provide for control of the modified spatial separation in accordance with a posture profile associated with the detected posture. Thus, if the user is sitting, the posture profile may provide a limit on the maximum angular separation, while if the user is standing a wider angular separation may be permitted. Accordingly, clip viewing directions may be provided that are sympathetic to the range of motion comfortably available to the user dependent on their posture. Thus, the posture profile may define a maximum angular separation with which the modified angular separation should comply or may define a predetermined modified angular separation.

In a third aspect there is provided a method, the method comprising;
in respect of virtual reality content comprising video imagery configured to provide a virtual reality space for viewing in virtual reality and
based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive, non-spatially-overlapping, clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

In a fourth aspect there is provided a method, the method comprising;
in respect of virtual reality summary content comprising a plurality of clips, each clip comprising video imagery associated with one of a plurality of highlight portions of virtual reality content, the virtual reality content comprising video imagery configured to provide a virtual reality space for viewing in virtual reality and each highlight portion comprising a spatial portion of the virtual reality content, each highlight portion associated with a viewing direction in said virtual reality space, and each clip provided for display with a clip viewing direction comprising a direction in which a user is required to point their viewing device to view the clip,
based on the viewing directions and clip viewing directions, provide for display of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

In a fifth aspect there is provided a computer readable medium comprising computer program code stored thereon, the computer readable medium and computer program code being configured to, when run on at least one processor, perform the method of the third aspect or the fourth aspect.

In a further aspect there is provided an apparatus, the apparatus comprising means configured to, in respect of virtual reality content comprising video imagery configured to provide a virtual reality space for viewing in virtual reality and
based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive, non-spatially-overlapping, clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

In a further aspect there is provided an apparatus, the apparatus comprising means configured to, in respect of virtual reality summary content comprising a plurality of clips, each clip comprising video imagery associated with one of a plurality of highlight portions of virtual reality content, the virtual reality content comprising video imagery configured to provide a virtual reality space for viewing in virtual reality and each highlight portion comprising a spatial portion of the virtual reality content, each highlight portion associated with a viewing direction in said virtual reality space, and each clip provided for display with a clip viewing direction comprising a direction in which a user is required to point their viewing device to view the clip,
based on the viewing directions and clip viewing directions, provide for display of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

The present disclosure includes one or more corresponding aspects, examples or features in isolation or in various combinations whether or not specifically stated (including claimed) in that combination or in isolation. Corresponding means and corresponding functional units (e.g., function enabler, video imagery extractor, video imagery compiler, viewing direction measurer, viewing direction modifier, video player, direction sensor) for performing one or more of the discussed functions are also within the present disclosure.

Corresponding computer programs for implementing one or more of the methods disclosed are also within the present disclosure and encompassed by one or more of the described examples.

The above summary is intended to be merely exemplary and non-limiting.

### Brief Description of the Figures

A description is now given, by way of example only, with reference to the accompanying drawings, in which:
figure 1 illustrates an example apparatus embodiment;
figure 2 illustrates an example virtual reality space;
figure 3 illustrates an plan view of the virtual reality space of figure 2;
figure 4 illustrates an example viewing device movement;
figure 5 illustrates the modification of the spatial separation of consecutive clips;
figure 6 illustrates an example viewing device movement based on the modified spatial separation;
figure 7 illustrates an example spatial arrangement of the clips of virtual reality summary content at a first modification level;
figure 8 illustrates an example spatial arrangement of the clips of virtual reality summary content at a second modification level;
figure 9 shows a flowchart illustrating an example method;
figure 10 shows a flowchart illustrating an example method;
figure 11 shows a computer readable medium.

### Description of Example Aspects

Virtual reality (VR) may use a headset, such as glasses or goggles, or one or more displays that surround a user to provide a user with an immersive virtual experience. A virtual reality apparatus may present multimedia virtual reality content representative of a virtual reality space to a user to simulate the user being present within the virtual reality space. The virtual reality space may replicate a real world environment to simulate the user being physically present at a real world location or the virtual reality space may be computer generated or a combination of computer generated and real world multimedia content. The virtual reality space may be provided by a panoramic video, such as a video having a wide or 360° field of view (which may include above and/or below a horizontally oriented field of view). The virtual reality apparatus may provide for user interaction with the virtual reality space displayed. The virtual reality content provided to the user may comprise live or recorded images of the real world, captured by a virtual reality content capture device such as a panoramic video capture device or telepresence device, for example. One example of a virtual reality content capture device is a Nokia OZO camera. The virtual reality space may provide a 360° or more field of view and may provide for panning/rotating around said field of view based on movement of the VR user's head or eyes. The virtual reality view of a virtual reality space may be provided to said user by virtual reality apparatus via displays in the headset. The virtual reality space may appear to the user of the VR apparatus as a three dimensional space created from images of the virtual reality content. Thus, the VR content may comprise images taken in multiple viewing directions that can be displayed and arranged together to form a (uninterrupted, continuous) wrap around field of view.

Virtual reality content may, by its nature, be immersive and may thereby comprise a large amount of data. The virtual reality content may thus comprise video imagery (i.e. moving images) that have a large spatial extent, such as to surround the user. In certain situations it may be desirable to view a summary, such as a preview or trailer, for the virtual reality content without, necessarily, having to use virtual reality apparatus or to download/acquire/process the large amount of data associated with virtual reality content. Thus, a content producer or other entity may desire to produce a summary of the virtual reality content for display on electronic display devices. The summary may include highlights of the virtual reality content presented consecutively, similar to a conventional movie trailer. The creation of virtual reality summary content for consumption on a wide range of electronic devices while preserving a sense of the immersive nature of the original virtual reality content is challenging. Thus, in some examples, the virtual reality summary content may be considered to be a trailer or preview or summary of the virtual reality content.

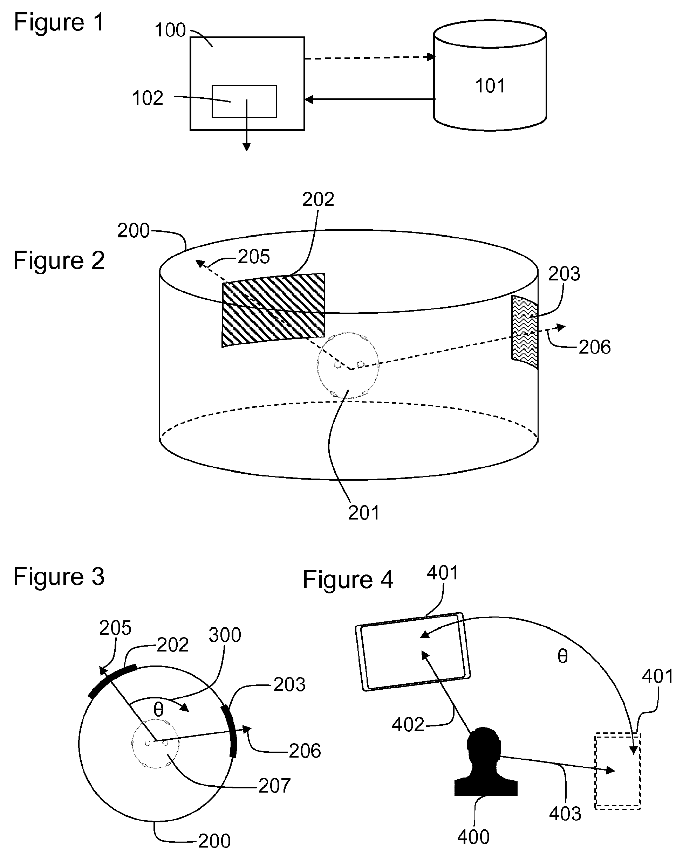

Figure 1 shows an apparatus 100 configured to provide for one or more of generation or display of virtual reality summary content comprising a plurality of clips. The apparatus 100 may be part of a virtual reality content production device configured to generate the virtual reality summary content from the virtual reality content. In some examples, the apparatus 100 is functionally provided by a computer server, which may comprise a memory and a processor, although in other examples the apparatus may be an electronic device of a user, such as a computer, mobile telephone or other apparatus as listed hereinafter. The server 100, in this example, is configured to receive virtual reality content from a virtual reality content store 101 where virtual reality content is stored (which may include being stored transiently or temporarily). Thus, the virtual reality content may be live content and the store 101 may be a memory or buffer of a display or onward transmission path. The apparatus 100 may also receive indications of highlight portions to extract from the virtual reality content. In other examples the virtual reality content is pre-recorded content stored in the virtual reality content store 101. In some examples, the server is configured to receive, from the content store 101, one or more videos representing highlight portions and comprising spatial portions of virtual reality content. The server 100 is configured to generate or display virtual reality summary content 102. The virtual reality summary content may be stored in the content store 101, a different content store or be provided for display.

In this embodiment the apparatus 100 (or other electronic device) mentioned above may have only one processor and one memory but it will be appreciated that other embodiments may utilise more than one processor and/or more than one memory (e.g. same or different processor/memory types). Further, the apparatus 100 may be an Application Specific Integrated Circuit (ASIC).

The processor may be a general purpose processor dedicated to executing/processing information received from other components, such as from content store 101 and user input (such as via a man machine interface) in accordance with instructions stored in the form of computer program code in the memory. The output signalling generated by such operations of the processor is provided onwards to further components.

The memory (not necessarily a single memory unit) is a computer readable medium (solid state memory in this example, but may be other types of memory such as a hard drive, ROM, RAM, Flash or the like) that stores computer program code. This computer program code stores instructions that are executable by the processor, when the program code is run on the processor. The internal connections between the memory and the processor can be understood to, in one or more example embodiments, provide an active coupling between the processor and the memory to allow the processor to access the computer program code stored on the memory.

In this example the processor and memory are all electrically connected to one another internally to allow for electrical communication between the respective components. In this example the components are all located proximate to one another so as to be formed together as an ASIC, in other words, so as to be integrated together as a single chip/circuit that can be installed into an electronic device. In some examples one or more or all of the components may be located separately from one another.

Figure 2 shows virtual reality content illustrated as a cylindrical virtual reality space 200 surrounding a viewer. Thus, the cylinder may represent the space or area over which video imagery of the VR content extends for virtual reality viewing by a user. While a cylindrical representation is used in Figure 2, it will be appreciated that the virtual reality space may be represented as a sphere surrounding the user to illustrate that the viewing directions of the space surrounds the user in a substantially horizontal plane as well as above and below. The cylindrical representation has been used here for clarity although it will be appreciated that the video imagery of the virtual reality content may have at least a 180°, 270° or 360° field of view and may include above and below a substantially horizontally oriented field of view. A virtual reality content capture device 201 is shown at the centre of the virtual reality space to show the effective point of view of the video imagery that extends over the virtual reality space 200.

Figure 2 shows two highlight portions; a first highlight portion 202 and a second highlight portion 203. In this example, the highlight portions 202, 203 are temporally located at different time points (t1 and t2 respectively) in the video imagery of the virtual reality content despite being shown together in Figure 2. In other examples, the highlight portions may temporally overlap. Each highlight portion comprises a spatial portion of the video imagery that forms the virtual reality space 200. Thus, in this example, the virtual reality space 200 is configured to surround the viewing user such that the video imagery can be seen all around. The highlight portions 202, 203 comprise a spatial portion, i.e. a smaller area, of the total area of the video imagery that extends over the virtual reality space. The highlight portions are thereby smaller in spatial extent than the spatial extent of the virtual reality space. The spatial extent of the highlight portions may be defined in any appropriate way such as the angular extent vertically and horizontally (or other orthogonal directions) as measured from the point of view of the content capture device 201 or in terms of the pixels of the video imagery used. However represented, the highlight portions may be considered to be a crop area of the video imagery comprising the cropped video imagery itself or instructions on the crop area to extract from the video imagery of the virtual reality content.

Each highlight portion is also associated with a viewing direction 205, 206 in the virtual reality space comprising the direction the user would have to look to see that particular highlight portion in virtual reality. It will be appreciated that the viewing direction may be defined relative to an arbitrary coordinate system (such as a polar coordinate system) or in any other appropriate way. The viewing direction may be defined relative to a predetermined viewing direction. The viewing direction may be defined in terms of a centre point of the spatial extent of the highlight portion (as shown in the figure) or in any other appropriate manner.

The highlight portions may further define different temporal portions of the video imagery of the virtual reality content. Thus, the times t1 and t2 may define overlapping or non-overlapping temporal portions of the video imagery. For example, the first highlight portion 202 may be defined as the video imagery at its spatial position between t = 30 minutes and t = 30 minutes + 10 seconds relative to the run-time of the virtual reality content. Likewise the second highlight portion 203 may be defined as the video imagery at its spatial position between t = 60 minutes and t = 60 minutes + 8 seconds relative to the run-time of the virtual reality content. However represented, the highlight portions may be considered to be a crop area over a crop time of the video imagery comprising the cropped video imagery itself at the crop time point or instructions on the crop area and crop time to extract the video imagery from the virtual reality content.

Figure 3 shows a plan view of the virtual reality space of Figure 2 illustrating the angular difference 300, θ, between the viewing direction 205 of the first highlight portion 202 and the viewing direction 206 of the first highlight portion 202.

Virtual reality summary content may be generated from the virtual reality content using the highlight portions 202, 203 for display on a viewing device, such as a mobile telephone, tablet or other handheld electronic device. If it is supposed that the first highlight portion 202 at time t1 and the second highlight portion 203 at time t2 form part of the virtual reality summary content and are to be displayed consecutively with one another, Figure 4 shows that a user 400 may be required to move their viewing device 401 (a mobile phone) through an angle substantially equivalent to the angular difference θ. Thus, the user may be required to point their viewing device in direction 402 to view the first highlight portion 202 and then, subsequently, point their viewing device in direction 403 to view the second highlight portion 203. This may be inconvenient for the user 400.

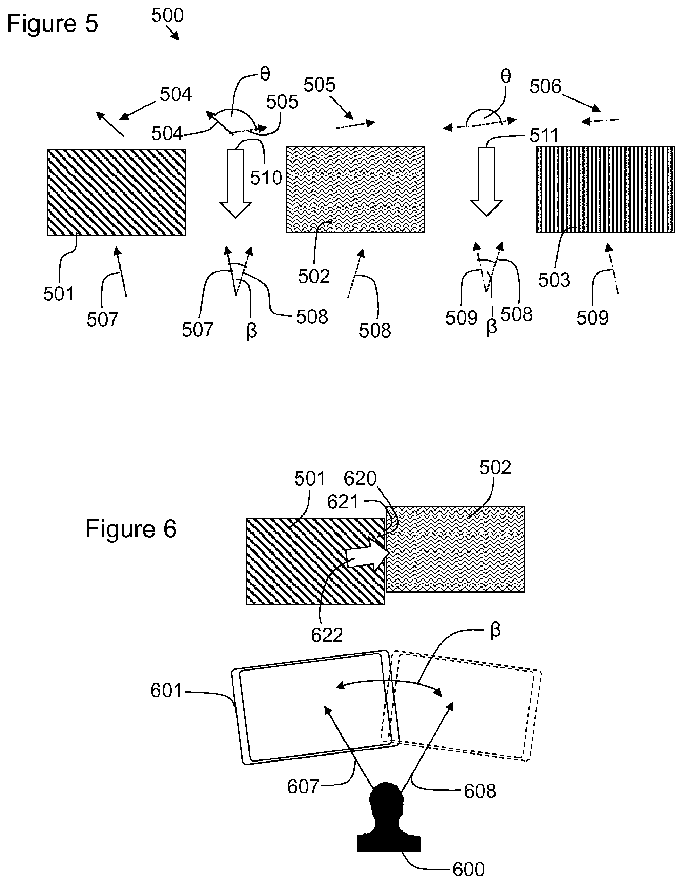

Figure 5 shows a series 500 of clips 501, 502, 503 derived from the first highlight portions 202, a second highlight portion 203 and a third highlight portion (not shown in the earlier figures). Each clip is the video imagery of its associated highlight portion. Each highlight portion is associated with a viewing direction 504, 505 and 506, which is derived from the direction in which it can be viewed in the virtual reality space 200. The viewing directions shown in figure 5 are depicted as if in plan view, although it will be appreciated that the viewing direction may be a direction in spherical space (such as a direction with an azimuth and altitude/elevation component). The series 500 of clips form the virtual reality summary content and are configured to be provided for display in a time consecutive manner. Thus, the first clip 501 comprising the video imagery of highlight portion 202 will be provided for display followed by the second clip 502 comprising the video imagery of highlight portion 203 followed by the third clip 503 comprising the video imagery of the third highlight portion. Each clip of the virtual reality summary content is associated with a clip viewing direction 507, 508, 509 which defines a modified spatial separation between consecutive clips relative to the angular separation of the highlight portions associated with those consecutive clips.

Thus, the clip viewing direction 507 of the first clip of the virtual reality summary content may comprise a default clip viewing direction. The default clip viewing direction may be based on the direction the viewing device was pointing when the virtual reality summary content was selected for display or started playing. Thus, if we consider the first clip 501 and the second clip 502 and with reference to Figure 2, the highlight portions 202, 203 associated with these clips 501, 502 cover distinct areas of the virtual reality space and are therefore non-spatially-overlapping. The first and second clips 501, 502 are provided for consecutive viewing in the virtual reality summary content. However, rather than providing the consecutive clips 501, 502 with viewing directions 504 and 505, they are provided with a modified spatial separation shown by the relative difference between clip viewing directions 507 and 508.

Thus the virtual reality summary content is configured to provide for display of first clip 501 and second clip 502 with a modified spatial separation 510 such that the angular separation β between the clip viewing direction 507 and the clip viewing direction 508 is less than the angular separation between the viewing directions 504, 505 of the highlight portions 202, 203 associated with said at least first and second clips 501, 502 (i.e. a clip and its immediately preceding clip).

Likewise, with reference to the next "set" of consecutive clips, namely the second clip 502 and the third clip 503, the virtual reality summary content is configured to provide for display of second clip 502 and the third clip 503 with a modified spatial separation 511 such that the angular separation β between the clip viewing direction 508 and the clip viewing direction 509 is less than the angular separation between the viewing directions 505, 506 of the highlight portions associated with the second and third clips 502, 503 (i.e. a clip and its immediately preceding clip).

In this example, the modification of the spatial separation 510 and 511 is configured such that consecutive clips are provided for display substantially adjacent one another, albeit consecutively. Figure 6 shows a user 600 using a viewing device 601 (i.e. a mobile phone) to view the virtual reality summary content with the modified spatial separation. The solid line representation of the viewing device 601 represents the positon of the device 601 when oriented in a view direction 607 aligned with the first clip viewing direction 507 when viewing the first clip 501 and the dashed line representation of the viewing device 601 represents the position of the device 601 when oriented in a view direction 608 aligned with the second clip viewing direction 508 in which the device 601 is required to point when viewing the second clip 502, temporally after the first clip 501. Thus, while the first clip 501 and second clip 502 are shown together in Figure 6 for clarity, it will be appreciated that they are actually viewed one after the other. Accordingly, with the modified spatial separation, the angle through which the viewing device must be moved, β, to view the second clip 502 after viewing the first clip 501 is reduced compared to the example in Figure 4.

In some examples, consecutive clips of the virtual reality summary content may be presented for display non-temporally-overlapping or partially-temporally-overlapping. Clips that are partially-temporally-overlapping may provide for easy transition between clips without interruption. In one or more embodiments, the apparatus may provide for the user switching between the clips at will by turning the viewing device to different orientations corresponding to the clips. For example, based on turning input prior to the end of a current clip, the current clip might be paused and the playback of a second or subsequent clip may start.

In this example, the physical movement of the viewing device 601 may be used to control the view direction of the device 601 such that it can be aligned with the clip viewing directions 507, 508, 509. Those skilled in the art will be familiar with the use of accelerometers or other orientation sensors to control a view direction on the device 601. In another example, rather than accelerometers or in addition thereto, the apparatus may analyse the motion of a captured video feed of a camera associated with the apparatus and based on that control the view direction. However, other ways of controlling the view direction may be used, such as user input on a touch sensitive display or other user interface may be used. Thus, while movement of the viewing device 601 is used to control the view direction, user input could achieve the same aim of changing the view direction and the modified spatial separation may reduce the amount of or time required to apply the user input required.

The modified spatial separation, in this example, is such that the relative direction through which the viewing device must be rotated between one of the clips and the subsequent clip is preserved but the angular separation is reduced such that the consecutive clips are provided for display in view directions substantially adjacent but offset from one another. The offset may be related to the spatial dimensions of the clips or may be a predetermined amount. Thus, while being displayed consecutively, the area of space used to display one of the clips is substantially adjacent to the area of space used to display an immediately subsequent clip. In Figure 6, an edge 620 of the second clip 502 is shown to be located such that it substantially abuts an edge 621 corresponding to the first clip 501 and where said edge was displayed prior to display of the second clip 502.

In the above examples, the indicated highlight portions 202, 203 may be predetermined and defined by a content producer or a virtual reality summary content producer. In some examples the indicated highlight portions are based on user preferences. Accordingly, the apparatus may be configured to determine the crop areas and crop times for the plurality of highlight portions based on user preferences. Thus, each virtual reality content summary may be individual to a user. For example, a user may be a keen amateur guitar player and based on user input preferences or machine learnt preferences (the apparatus may review historical use of the apparatus or an associated apparatus such as the video viewing history of the user's mobile phone/computer) the apparatus is configured to provide for extraction of the video imagery and associated viewing direction to form the indicated highlight portions from the virtual reality content based on said user preferences.

Thus, the apparatus may receive the virtual reality content and generate the virtual reality summary content on-the-fly or in response to a user request. Accordingly, in the user preference derived virtual reality summary content example, the apparatus may be configured to analyse the video imagery of the virtual reality content for comparison with the user preferences. Accordingly, if the virtual reality content is a concert or musical performance and the user preferences indicate the user has an interest in guitar based music, then the user preferences may provide for extraction of highlight portions that feature guitar based music. This may be achieved using predetermined tags or metadata present in the virtual reality content that describe the virtual reality content over its running time or by use of audio/visual identification algorithms.

Figure 6 also shows a next-clip-direction indicator 622 for presentation to a user during display of at least one of the clips. In this example, the next-clip-direction indicator is presented during display of the first clip 501 to indicate the direction the user must move their viewing device 601 to view the second clip 502. In this example, the next-clip-direction indicator comprises a graphical element comprising, for example, an arrow 622. In other embodiments, the graphical element may be a marker on the display (such as at the edge thereof) positioned based on the display location of the next clip. In one or more examples, the next-clip-direction indicator comprises an audible indicator, such as a voice instruction, particular predetermined sounds, or using directional audio (such as from a speaker located at the relevant edge of the viewing device). In other examples the indicator may comprise a haptic indicator. Thus, the viewing device may vibrate in a particular way or at a particular location around the display of the viewing device to indicate where the next clip will be presented.

In one or more examples, the apparatus 100 may be configured to, based on a detected posture of a user, provide for control of the modified spatial separation in accordance with a posture profile associated with the detected posture. Thus, signalling received from sensors may provide the apparatus with an indication of posture. It will be appreciated that the range of comfortable motion while sitting may be less than when standing and therefore the posture may be used to control the degree of the modified spatial separation. A posture profile may provide predetermined parameters on what degree to modify the spatial separation in each case. For example, the posture profile may determine that angular separations of no more than a first predetermined amount may be provided while the user is sitting. Further, for example, the posture profile may determine that angular separations of no more than a second predetermined amount, greater than the first predetermined amount, may be provided while the user is standing. Accordingly, clip viewing directions may be provided that are sympathetic to the range of motion comfortably available to the user dependent on their posture. The posture profile parameters may be predetermined or user provided.

While the modified spatial separation may provide for easier viewing by the user, there may be instances where the user wishes to consume the virtual reality summary content with the original spatial relationship between the clips preserved i.e. corresponding to the viewing directions 205, 206 of the associated highlight portions.

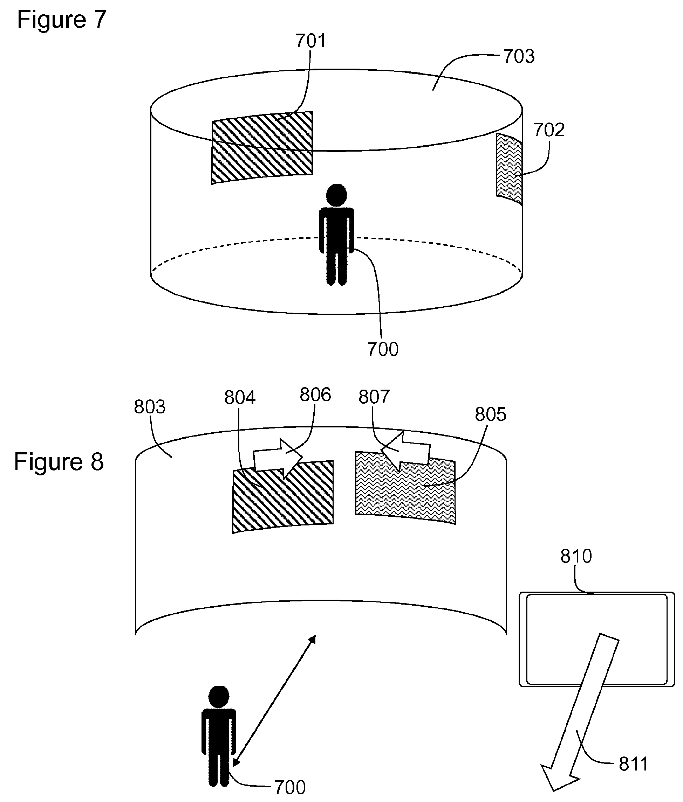

Figure 7 shows the user 700 viewing the clips 701, 702 with a viewing direction corresponding to the highlight portion with which they are associated. Accordingly, the user is effectively viewing clips as originally extracted from the virtual reality space 703. Figure 8 shows how the virtual reality space 703 can be thought of as unwrapping from around the user and shrinking in size to effect the modified spatial separation. Thus, a shrunk virtual reality space 803 will effectively reduce the spatial separation between the clips 804, 805 as shown by arrows 806, 807.

In one or more examples, the user 700 may be able to transition between being presented with the original spatial separation between the clips 701, 702 and being presented with the modified spatial separation by way of user input. In this example, the apparatus is configured to provide for a progressive transition between the original spatial separation and a modified spatial separation in which consecutive clips are presented substantially adjacent one another.

Figure 8 shows the user 700 providing a user input to their viewing device 810 by way of a free-space movement 811. In this example, the motion of moving the viewing device towards them provides for a reduction in the modified spatial separation while moving the viewing device 810 away provide for an increase in the spatial separation back to how the clips would be presented in the virtual reality space of the virtual reality content. Other gestures may be used. It will be appreciated that the spatial size of the clips may not be manipulated when the spatial separation is, for example, reduced (or increased with other/opposite user input). Thus, the user input may provide for control of the spatial positioning of the clips from a fixed point of view rather than, for example, a zoom operation which affects the effective position of the point of view of the clips and therefore the viewed size of the clips.

It will be appreciated that other user input, such as provided by input to a touchscreen or other man machine interface may provide the same effect of providing for control of the modified spatial separation at least between (i) an angular separation such that the clips are presented substantially adjacent one another and (ii) an angular separation corresponding to the viewing directions of the highlight portions associated with said clips in the virtual reality content. In other examples, the user input comprises one or more of a translation motion, user actuation of a graphical user interface element, or a voice or sight command.

In one or more of the above embodiments, the space outside the spatial extent of the clip being viewed may be a static or predetermined background.

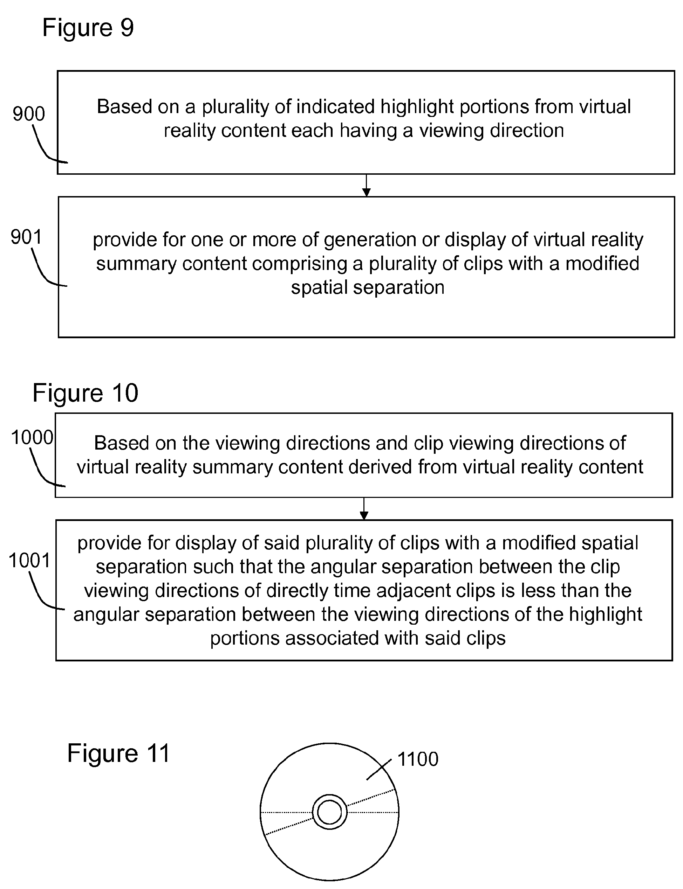

Figure 9 shows a flow diagram illustrating the steps of based on 900 a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions, provide for 901 one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive, non-spatially-overlapping, clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

Figure 10 shows a flow diagram illustrating the steps of based on 1000 the viewing directions and clip viewing directions, provide for display 1001 of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

Figure 11 illustrates schematically a computer/processor readable medium 1100 providing a program according to an example. In this example, the computer/processor readable medium is a disc such as a digital versatile disc (DVD) or a compact disc (CD). In some examples, the computer readable medium may be any medium that has been programmed in such a way as to carry out an inventive function. The computer program code may be distributed between the multiple memories of the same type, or multiple memories of a different type, such as ROM, RAM, flash, hard disk, solid state, etc.

User inputs may be gestures which comprise one or more of a tap, a swipe, a slide, a press, a hold, a rotate gesture, a static hover gesture proximal to the user interface of the device, a moving hover gesture proximal to the device, bending at least part of the device, squeezing at least part of the device, a multi-finger gesture, tilting the device, or flipping a control device. Further the gestures may be any free space user gesture using the user's body, such as their arms, or a stylus or other element suitable for performing free space user gestures.

The apparatus shown in the above examples may be a portable electronic device, a laptop computer, a mobile phone, a Smartphone, a tablet computer, a personal digital assistant, a digital camera, a smartwatch, smart eyewear, a pen based computer, a non-portable electronic device, a desktop computer, a monitor, a household appliance, a smart TV, a server, a wearable apparatus, a virtual reality apparatus, or a module/circuitry for one or more of the same.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to perform at least the following:
in respect of virtual reality content comprising video imagery configured to provide a virtual reality space for viewing in virtual reality and
based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

2. The apparatus of claim 1, wherein the plurality of indicated highlight portions further define different temporal portions of the video imagery of the virtual reality content.

3. The apparatus of claim 1 or claim 2, wherein the virtual reality content is live content and the apparatus is configured to receive the indicated highlight portions during the live content.

4. The apparatus of claim 1 or claim 2, wherein the virtual reality content is pre-recorded content.

5. The apparatus of any preceding claim, wherein modified spatial separation is such that the angular separation between the clip viewing directions is configured to present the at least one clip and the immediately preceding clip at display locations that are substantially adjacent to one another.

6. The apparatus of any preceding claim, wherein the indicated highlight portions comprise predetermined crop areas of the video imagery associated with predetermined crop times of the video imagery and the apparatus is configured to provide for extraction of the video imagery and associated viewing direction to form cropped video portions from the virtual reality content for forming the clips based on the predetermined crop areas of the video imagery and the associated predetermined crop times of the video imagery.

7. The apparatus of any preceding claim, wherein the indicated highlight portions are based on user preferences and the apparatus is configured to provide for extraction of the video imagery and associated viewing direction to form the indicated highlight portions from the virtual reality content based on said user preferences.

8. An apparatus comprising:
at least one processor; and
at least one memory including computer program code,
the at least one memory and the computer program code configured to, with the at least one processor, cause the apparatus to perform at least the following:
in respect of virtual reality summary content comprising a plurality of clips, each clip comprising video imagery associated with one of a plurality of highlight portions of virtual reality content, the virtual reality content comprising video imagery configured to provide a virtual reality space for viewing in virtual reality and each highlight portion comprising a spatial portion of the virtual reality content, each highlight portion associated with a viewing direction in said virtual reality space, and each clip provided for display with a clip viewing direction comprising a direction in which a user is required to point their viewing device to view the clip,
based on the viewing directions and clip viewing directions, provide for display of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

9. The apparatus of claim 8, wherein the apparatus is configured to, based on user input, provide for control of the modified spatial separation at least between an angular separation such that the clips are presented at display locations substantially adjacent one another and an angular separation corresponding to the viewing directions of the highlight portions associated with said clips in the virtual reality content.

10. The apparatus of claim 9, wherein the apparatus is configured to, based on the user input, provide for a progressive change in the angular separation between the clip viewing direction of the at least one clip and the clip viewing direction of the temporally adjacent clip.

11. The apparatus of any preceding claim, wherein the apparatus is configured to provide a next-clip-direction indicator for presentation to a user during display of at least one of the clips, the indicator based on the viewing direction and/or clip viewing direction of a subsequent clip of the virtual reality summary content, the next-clip indicator thereby indicating to a user at least the direction in which to move their viewing device to view the next clip.

12. The apparatus of any preceding claim 8, wherein the apparatus is configured to, based on a detected posture of a user, provide for control of the modified spatial separation in accordance with a posture profile associated with the detected posture.

13. A method, the method comprising
in respect of virtual reality content comprising video imagery configured to provide a virtual reality space for viewing in virtual reality and
based on a plurality of indicated highlight portions, each highlight portion comprising a spatial portion of the video imagery that forms the virtual reality space and being smaller in spatial extent than the spatial extent of the virtual reality space, and further based on a viewing direction in the virtual reality space of each of the plurality highlight portions,
provide for one or more of generation or display of virtual reality summary content comprising a plurality of clips, each clip comprising the video imagery associated with one of the highlight portions, the virtual reality summary content configured to provide for display of the clips in a time consecutive manner and to provide for display of consecutive clips with a modified spatial separation such that the angular separation between a clip viewing direction of at least one clip and a clip viewing direction of an immediately preceding clip is less than the angular separation between the viewing directions of the highlight portions associated with said at least one clip and said immediately preceding clip.

14. A method, the method comprising
in respect of virtual reality summary content comprising a plurality of clips, each clip comprising video imagery associated with one of a plurality of highlight portions of virtual reality content, the virtual reality content comprising video imagery configured to provide a virtual reality space for viewing in virtual reality and each highlight portion comprising a spatial portion of the virtual reality content, each highlight portion associated with a viewing direction in said virtual reality space, and each clip provided for display with a clip viewing direction comprising a direction in which a user is required to point their viewing device to view the clip,
based on the viewing directions and clip viewing directions, provide for display of said plurality of clips of the virtual reality summary content in a time consecutive manner and with a modified spatial separation such that the angular separation between the clip viewing directions of at least one of the clips and a temporally adjacent clip is less than the angular separation between the viewing directions of the highlight portions associated with said at least one clip and said temporally adjacent clip.

15. A computer readable medium comprising computer program code stored thereon, the computer readable medium and computer program code being configured to, when run on at least one processor, perform the method of at least claim 13 or claim 14.
